# FASCICULE DE BREVET EUROPEEN

(11) **EP 4 051 589 B1**
(45) Date de publication et mention de la délivrance du brevet: **29.11.2023**
(21) Numéro de dépôt: 20792435.8
(22) Date de dépôt: 21.10.2020
(51) Int. Cl.: B64D 11/06

(54) **SIEGE NOTAMMENT POUR UN AVION À ACTIONNEUR UNIQUE**
SITZ, INSBESONDERE FÜR EIN FLUGZEUG, MIT EINER EINZIGEN BETÄTIGUNGSVORRICHTUNG
SEAT, IN PARTICULAR FOR AN AIRCRAFT, WITH A SINGLE ACTUATOR

(30) Priorité: 31.10.2019 FR 1912252
(43) Date de publication de la demande: 07.09.2022
(73) Titulaire: Safran Seats, 78370 Plaisir (FR)
(72) Inventeur: CAZALIS, Olivier, 77550 MOISSY-CRAMAYEL (FR); LIGONNIERE, Laurent, 77550 MOISSY-CRAMAYEL (FR); VARNIER, Julien, 77550 MOISSY-CRAMAYEL (FR)
(74) Mandataire: Marconnet, Sébastien
(86) Numéro de dépôt international: PCT/EP2020/079562
(87) Numéro de publication internationale: WO 2021/083754

(56) Documents cités:
- EP-A1- 1 352 828
- WO-A1-2012/053022
- CN-A- 108 715 227

## Description

La présente invention porte sur un siège notamment pour un avion à actionneur unique. L'invention trouve une application particulièrement avantageuse, mais non exclusive, avec les sièges d'avion de type classe affaires.

Les passagers en classe affaires apprécient d'avoir des sièges actionnés électriquement pour pouvoir passer d'une position assise à une position lit. Le passage d'une position à l'autre est effectué généralement en pressant simplement sur un bouton.

Généralement, les sièges comportent des systèmes d'actionnement indépendants pour toutes les parties du siège afin de fournir au passager un niveau de réglage fin de la position du Le document CN 108 715 227 décrit un tel siège.

Toutefois, la multiplication du nombre d'actionneurs a pour inconvénient de rendre la conception des sièges complexes, et d'augmenter la masse du siège. Cela engendre également une problématique d'alimentation électrique, dans la mesure où la puissance nécessaire augmente avec le nombre de moteurs électriques à alimenter. En outre, les actionneurs sont encombrants, ce qui rend difficile l'implantation de boîtiers électriques et de câbles sous le siège.

L'invention vise à remédier efficacement à au moins un des inconvénients précités en proposant un siège notamment pour un avion comportant:
- un support de siège,
- une assise,
- un dossier articulé par rapport à l'assise par l'intermédiaire d'une liaison pivot,
- un repose-jambes articulé par rapport à l'assise par l'intermédiaire d'une liaison pivot,
- ledit siège étant mobile entre une position assise et une position lit dans laquelle le dossier et le repose-jambes se situent dans un prolongement de l'assise,
- l'assise étant montée coulissante par rapport au support de siège,
- ledit siège comportant au moins une bielle, dite bielle pivot de dossier, comportant une première extrémité liée en rotation par rapport au dossier et une deuxième extrémité liée en rotation par rapport au support de siège,
- le repose-jambes étant lié mécaniquement au dossier par l'intermédiaire d'un dispositif de déploiement à bielle,
- ledit siège comportant en outre un actionneur unique apte à assurer seul un déplacement d'un ensemble de composants du siège formé au moins par l'assise, le dossier, et le repose-jambes pour faire passer ledit siège de sa position assise vers sa position lit et inversement.

L'invention permet ainsi de proposer une cinématique dans laquelle un seul actionneur permet de faire passer le siège d'une position extrême à une autre. La réduction du nombre d'actionneurs par rapport à un siège standard permet de simplifier le câblage, de libérer de l'espace dans l'environnement du siège, et de réduire le poids du siège. L'invention permet également de réduire la consommation électrique du siège. Il est à noter également que la cinématique du siège selon l'invention est facilement intégrable sur un siège existant. L'invention pourra donc permettre de proposer aisément une cinématique indépendante ou une cinématique à actionneur unique pour une structure de base commune.

Selon une réalisation, l'actionneur unique est disposé entre l'assise et le support de siège.

Selon une réalisation, ledit siège comporte au moins une bielle, dit bielle pivot d'assise, ayant une première extrémité liée en rotation par rapport à l'assise et une deuxième extrémité liée en rotation par rapport au support de siège.

Selon une réalisation, le repose-jambes comporte une extension portant un repose-pieds permettant de fournir un support pour les pieds d'un passager lorsque l'extension se situe dans une position déployée.

Selon une réalisation, ledit siège comporte en outre un accoudoir et un système de guidage de l'accoudoir apte à positionner l'accoudoir dans un prolongement du dossier lorsque le siège se trouve dans une position lit.

Selon une réalisation, le système de guidage comporte un vérin à gaz ayant une première extrémité liée en rotation par rapport à l'accoudoir et une deuxième extrémité liée en rotation par rapport à la bielle pivot de dossier.

Selon une réalisation, ledit siège comporte un système de déverrouillage en rotation de l'accoudoir muni d'un doigt mobile en translation entre une position verrouillée dans laquelle le doigt coopère avec un logement ménagé dans une ferrure liée mécaniquement au vérin à gaz et une position dégagée dans laquelle le doigt est dégagé du logement ménagé dans la ferrure de façon à autoriser une rotation libre de l'accoudoir par rapport à la ferrure.

Selon une réalisation, ledit siège comporte une têtière mobile entre une position haute dans laquelle la têtière est surélevée par rapport au dossier et une position basse dans laquelle la têtière se situe dans un prolongement du dossier pour augmenter une surface de lit.

Selon une réalisation, la têtière est liée par une bielle à une traverse connectant deux bielles pivot de dossier.

Selon une réalisation, la têtière porte au moins un axe apte à glisser à l'intérieure d'au moins une rainure munie d'un premier niveau correspondant à la position haute de la têtière et d'un deuxième niveau correspondant à la position basse de la têtière.

Selon une réalisation, ledit siège comporte au moins un vérin à gaz ayant une première extrémité liée en rotation par rapport à la bielle pivot de dossier et une deuxième extrémité liée en rotation par rapport au support de siège.

Selon une réalisation, le dispositif de déploiement à bielle comporte:
- au moins une bielle ayant une première extrémité liée en rotation par rapport au dossier et une deuxième extrémité liée en rotation par rapport à une pièce intermédiaire liée en rotation par rapport à l'assise, et
- au moins un vérin à gaz ayant une première extrémité liée en rotation par rapport au repose-jambes et une deuxième extrémité liée en rotation par rapport à la pièce intermédiaire.

Selon une réalisation, un vérin à gaz est lié en rotation à la pièce intermédiaire, au repose-jambes, et à l'extension du repose-jambes pour permettre un déploiement de l'extension lorsque le repose-jambes passe dans une position relevée.

Selon une réalisation, un enrouleur d'une sangle destinée à maintenir le haut du corps d'un passager est fixé sur une traverse reliant deux bielles pivot de dossier entre elles.

L'invention concerne en outre un avion comportant au moins un siège tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue de côté d'un siège d'avion selon l'invention en position assise;
[Fig. 2a] La figure 2a est une vue de côté d'un siège d'avion selon l'invention en position intermédiaire;
[Fig. 2b] La figure 2b est une vue en perspective d'un siège d'avion selon l'invention en position intermédiaire montrant le repose-pieds;
[Fig. 2c] La figure 2c est une vue partielle de côté d'un siège d'avion selon l'invention en position intermédiaire sans les mousses montrant le détail de la liaison glissière entre l'assise et le support de siège;
[Fig. 3a] La figure 3a est une vue de côté d'un siège d'avion selon l'invention en position lit;
[Fig. 3b] La figure 3b est une vue de dessous d'un siège d'avion selon l'invention en position lit;
[Fig. 4] La figure 4 est une vue en perspective des composants arrière d'un siège d'avion selon l'invention;
[Fig. 5a] La figure 5a est une vue en perspective montrant le détail de la liaison mécanique entre l'assise et le repose-jambes d'un siège d'avion selon l'invention lorsque le repose-jambes est en position rétractée;
[Fig. 5b] La figure 5b est une vue en perspective montrant le détail de la liaison mécanique entre l'assise et le repose-jambes lorsque le repose-jambes est en position relevée;
[Fig. 6] La figure 6 est une vue en perspective partielle montrant la configuration de l'actionneur linéaire commandant le déplacement du siège d'une position à une autre;
[Fig. 7] La figure 7 est une vue en perspective d'un accoudoir du siège d'avion selon l'invention;
[Fig. 8a] La figure 8a est une vue en perspective générale d'un système de déverrouillage de l'accoudoir du siège d'avion selon l'invention;
[Fig. 8b] La figure 8b est une vue en perspective des composants internes du système de déverrouillage de l'accoudoir de la figure 8a;
[Fig. 9] La figure 9 est une vue en perspective de dos d'un siège selon l'invention montrant le mécanisme de déplacement d'une têtière;
[Fig. 10a] La figure 10a est une vue en perspective montrant une têtière en position haute;
[Fig. 10b] La figure 10b est une vue en perspective montrant une têtière en position basse dans laquelle la têtière se situe dans un prolongement du dossier;
[Fig. 11a] La figure 11a montre une vue en perspective de face d'un siège selon l'invention ayant une configuration à trois points de fixation;
[Fig. 11b] La figure 11b montre une vue en perspective de dessous d'un siège selon l'invention ayant une configuration à trois points de fixation.

II est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

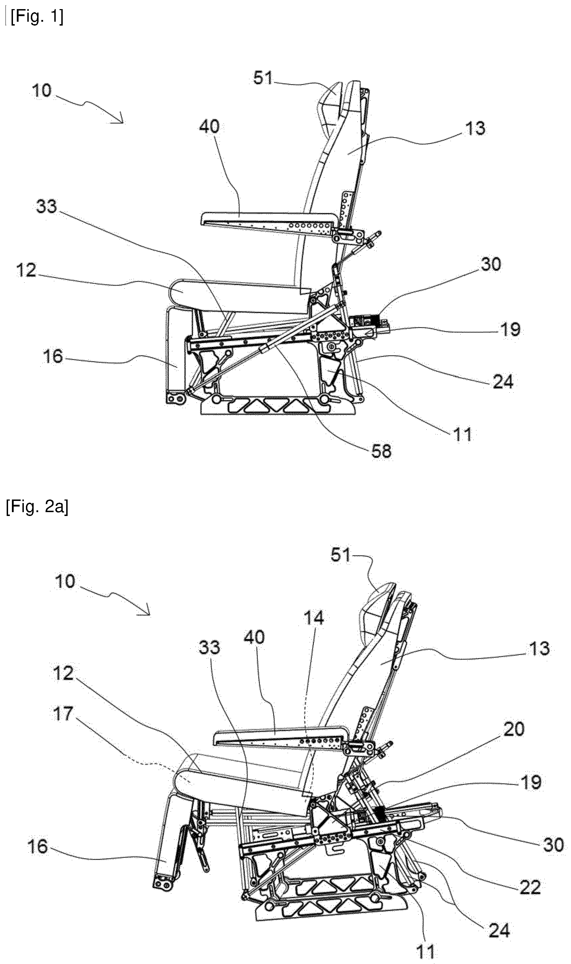

Les figures 1, 2a, 2b, 2c, 3a, 3b montrent un siège 10 notamment pour un avion comportant un support de siège 11 destiné à être fixé sur des rails d'un avion. A cet effet, le support de siège 11 comporte des pieds portant des verrous (non représentés) aptes à solidariser le support de siège 11 avec les rails de l'avion.

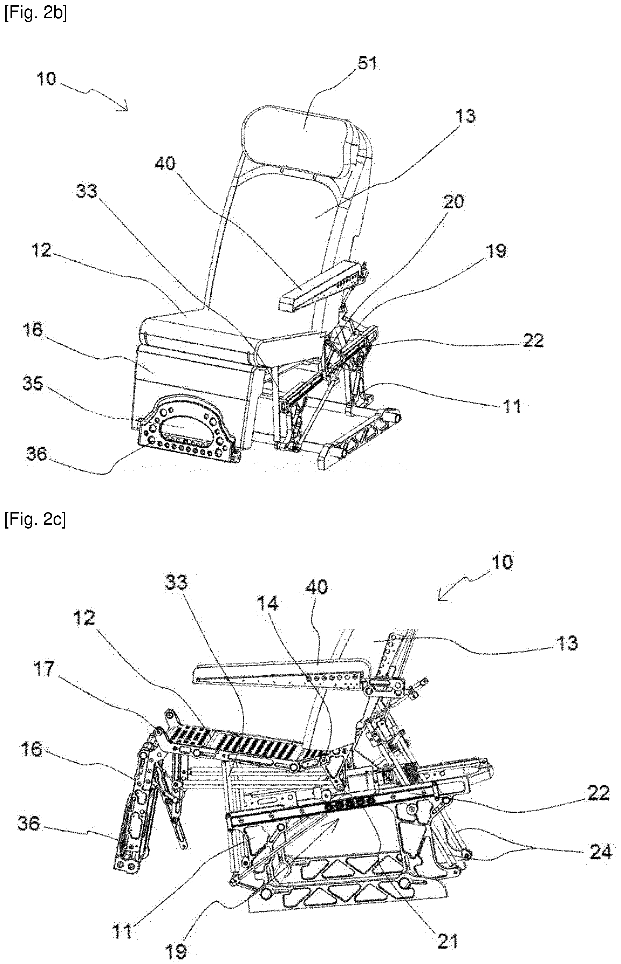

Le siège 10 comporte également une assise 12, un dossier 13 articulé par rapport à l'assise 12 par l'intermédiaire d'une liaison pivot 14, et un repose-jambes 16 articulé par rapport à l'assise 12 par l'intermédiaire d'une liaison pivot 17, tel que montré sur la figure 2c.

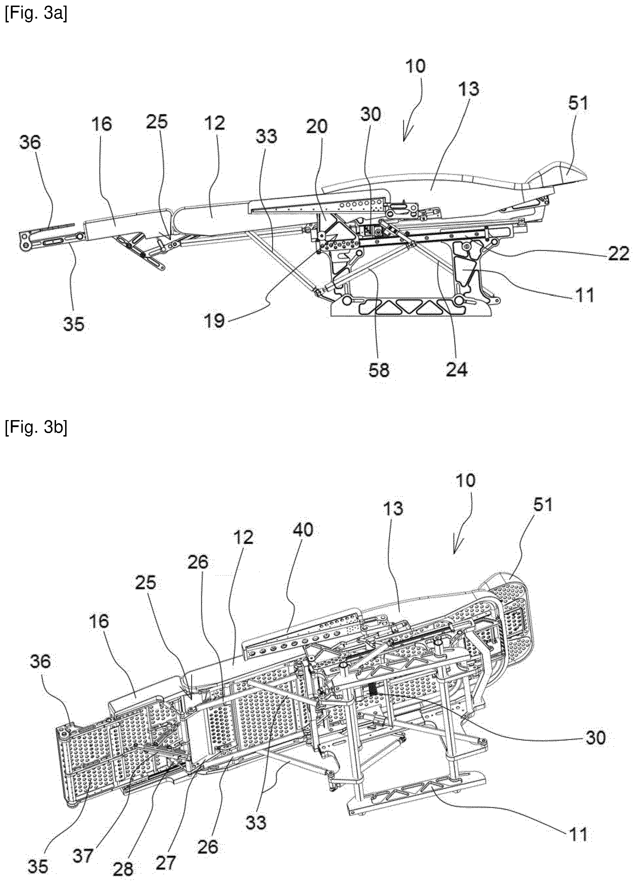

Le siège 10 est mobile entre une position assise visible sur la figure 1 dans laquelle le dossier 13 et le repose-jambes 16 forment chacun un angle non nul par rapport à l'assise 12, et une position lit visible sur les figures 3a et 3b dans laquelle le dossier 13 et le repose-jambes 16 se situent dans un prolongement de l'assise 12. Le siège 10 pourra également prendre des positions de confort intermédiaires, telles que la position montrée sur les figures 2a, 2b, et 2c.

L'assise 12 est montée coulissante par rapport au support de siège 11, notamment par l'intermédiaire d'une liaison glissière 19 bien visible sur les figures 1, 2a et 3a. Dans l'exemple représenté, la liaison glissière 19 est constituée par une pièce 20 portant des galets 21 destinés à coopérer avec un rail 22 fixé sur le support de siège 11, tel que montré sur la figure 2c. La pièce 20 portant les galets 21 est solidaire de l'assise 12. En variante, la structure pourra être inversée, c'est-à-dire que la pièce 20 portant les galets pourra être fixée sur le support de siège 11 tandis que le rail 22 pourra être fixé sur l'assise 12. En variante, la liaison glissière 19 est constituée par une pièce munie de patins glissant le long d'un rail.

Comme on peut le voir notamment sur les figures 2a et 2c, le siège 10 comporte au moins une bielle 24, dite bielle pivot de dossier, comportant une première extrémité liée en rotation par rapport au dossier 13 et une deuxième extrémité liée en rotation par rapport au support de siège 11. En l'occurrence, le siège 10 comporte deux bielles pivot de dossier 24 disposées de part et d'autre du dossier 13.

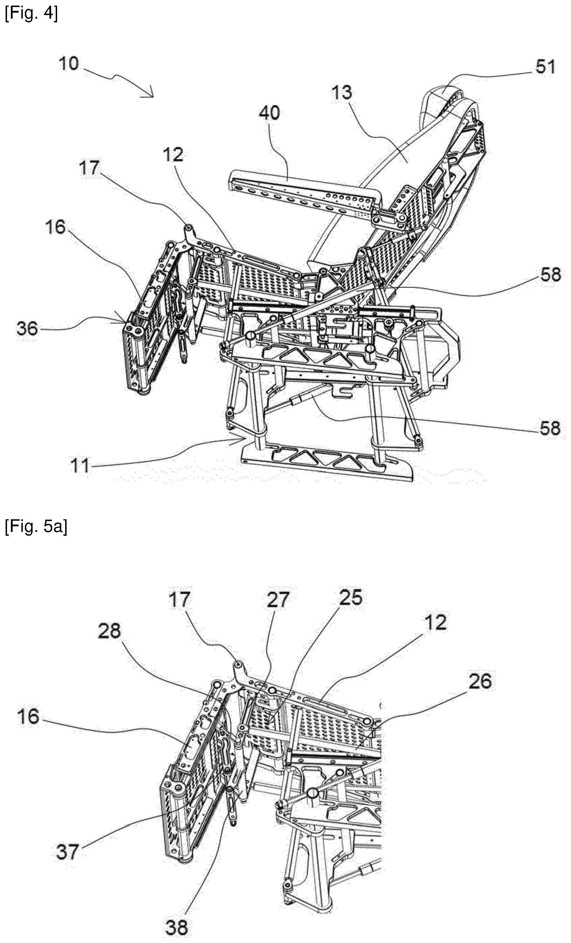

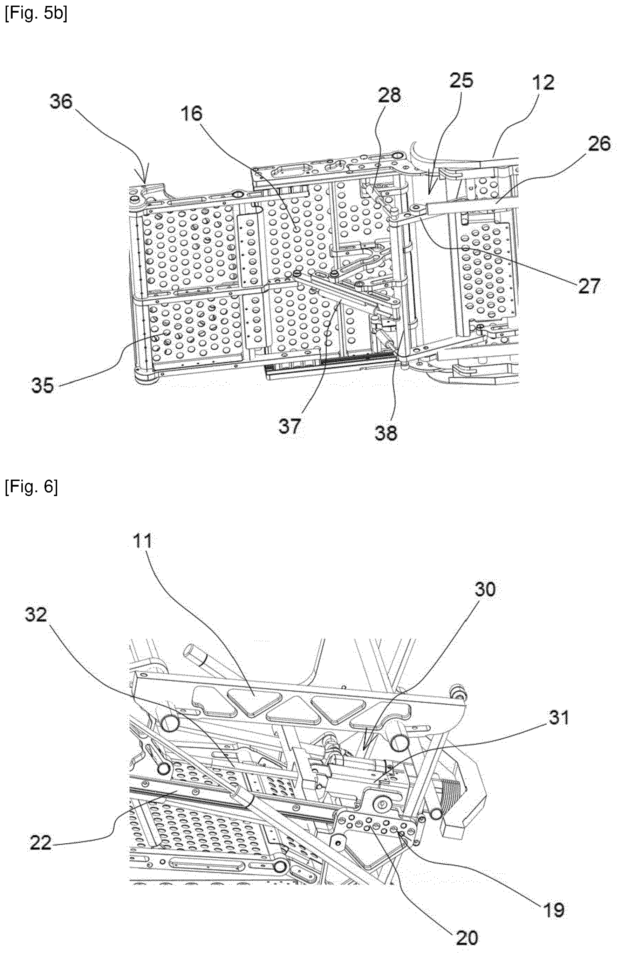

Par ailleurs, le repose-jambes 16 est lié mécaniquement au dossier 13 par l'intermédiaire d'un dispositif de déploiement à bielle 25 visible notamment sur les figures 3b, 5a, et 5b. Le dispositif de déploiement à bielle 25 comporte au moins une bielle 26, en l'occurrence deux, ayant une première extrémité liée en rotation par rapport au dossier 13 et une deuxième extrémité liée en rotation par rapport à une pièce intermédiaire 27. La pièce intermédiaire 27 est liée en rotation par rapport à l'assise 12. Au moins un vérin à gaz 28 présente une première extrémité liée en rotation par rapport au repose-jambes 16 et une deuxième extrémité liée en rotation par rapport à la pièce intermédiaire 27. Le vérin à gaz 28 permet d'amortir d'éventuels chocs lors du déploiement du repose-jambes 16.

Comme on peut le voir notamment sur les figures 1, 6, et 9, un actionneur 30 unique est disposé entre l'assise 12 et le support de siège 11, de sorte que ledit actionneur 30 unique est apte à assurer seul un déplacement d'un ensemble de composants du siège 10 formé au moins par l'assise 12, le dossier 13, et le repose-jambes 16 pour faire passer ledit siège 10 de sa position assise 12 vers sa position lit et inversement.

De préférence, l'actionneur 30 est un actionneur linéaire comportant un corps 31 coopérant avec une tige 32 le long de laquelle est apte à se déplacer le corps 31, tel que montré sur la figure 6. Le corps 31 est solidaire de la pièce 20 de la glissière 19 portant les galets 21 tandis que la tige 32 est fixée sur le support de siège 11. La tige 32 s'étend suivant une direction sensiblement parallèle aux rails 22 de la liaison glissière 19. L'actionneur 30 est à moteur électrique.

Les mouvements des différents composants du siège 10 ne sont pas indépendants mais liés les uns par rapport aux autres du fait de l'agencement particulier des mécanismes à bielles précités. En effet, lors du déplacement du siège 10 de la position assise 12 à la position lit, l'actionneur 30 engendre un déplacement vers l'avant de l'assise 12, et un déplacement vers l'arrière du dossier 13 contrôlé par la bielle pivot de dossier 24. En outre, la bielle 26 du dispositif de déploiement 25 pousse la pièce intermédiaire 27 qui tourne vers le haut de façon à soulever le repose-jambes 16 via le vérin à gaz 28. L'assise 12, le dossier 13, et le repose-jambes 16 se situent alors sensiblement dans un même plan pour former une surface de lit. Suivant un déplacement inverse, le siège 10 pourra repasser en position assise.

De préférence, au moins une bielle, dit bielle pivot d'assise 33, présente une première extrémité liée en rotation par rapport à l'assise 12 et une deuxième extrémité liée en rotation par rapport au support de siège 11. Une telle bielle 33 permet de disposer d'une configuration relevée de l'assise 12 lorsque le siège 10 se situe dans une position intermédiaire de confort, tel que cela est illustré par les figures 2a, 2b, et 2c.

Avantageusement, comme on peut le voir notamment sur les figures 3a, 3b, 5a, et 5b, le repose-jambes 16 pourra comporter une extension 35 portant un repose-pieds 36. L'extension 35 est mobile entre une position rétractée (cf. figure 5a) et une position déployée (cf. figure 5b) permettant de fournir un support pour les pieds d'un passager. Un vérin à gaz 37 est lié en rotation à la pièce intermédiaire 27 via une traverse 38, au repose-jambes 16, et à l'extension 35 du repose-jambes 16. Ainsi, lorsque le repose-jambes 16 passe d'une position rétractée à une position relevée le vérin à gaz 37 pousse sur l'extension 35 de façon à la faire passer en position déployée et rendre disponible le repose-pieds 36 pour le passager.

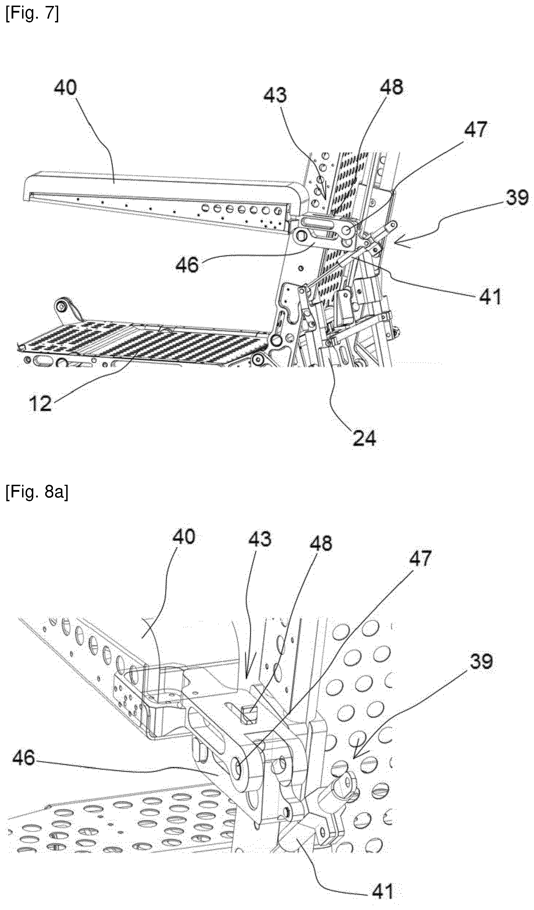

Par ailleurs, comme on peut le voir sur les figures 7, 8a, 8b, et 9, un système de guidage 39 est apte à positionner un accoudoir 40 dans un prolongement du dossier 13 lorsque le siège 10 se trouve dans une position lit. Dans ce cas, l'accoudoir 40 s'étend le long d'un côté latéral du dossier 13 et augmente ainsi la surface de lit du siège 10. Un seul accoudoir 40 a été représenté sur les figures mais on pourra prévoir deux accoudoirs 40 disposés de part et d'autre du siège.

L'accoudoir 40 étant monté rotatif par rapport au dossier 13, le système de guidage 39 comporte un vérin à gaz 41 ayant une première extrémité liée en rotation par rapport à l'accoudoir 40 et une deuxième extrémité liée en rotation par rapport à une bielle pivot de dossier 24. Ainsi, lorsque le siège 10 passe de la position assise 12 à la position lit, le déplacement du dossier 13 vers l'arrière engendre le déplacement de l'accoudoir 40 vers sa position dans laquelle l'accoudoir 40 se trouve dans le prolongement du dossier 13.

En outre, un système de déverrouillage 43 en rotation de l'accoudoir 40 est muni d'un doigt 44 mobile en translation entre une position verrouillée dans laquelle le doigt 44 coopère avec un logement 45 ménagé dans une ferrure 46 liée mécaniquement au vérin à gaz 41 et une position dégagée dans laquelle le doigt 44 est dégagé du logement 45 ménagé dans la ferrure 46 de façon à autoriser une rotation libre de l'accoudoir 40 par rapport à la ferrure 46. La rotation de l'accoudoir 40 est effectuée autour d'un axe 47 porté par ladite ferrure 46. Le déplacement du doigt 44 de la position verrouillée à la position déverrouillée peut être effectué au moyen d'un bouton 48 situé en partie supérieure du doigt 44. Un ressort de rappel 49 pourra être utilisé pour rappeler le doigt 44 en position verrouillée.

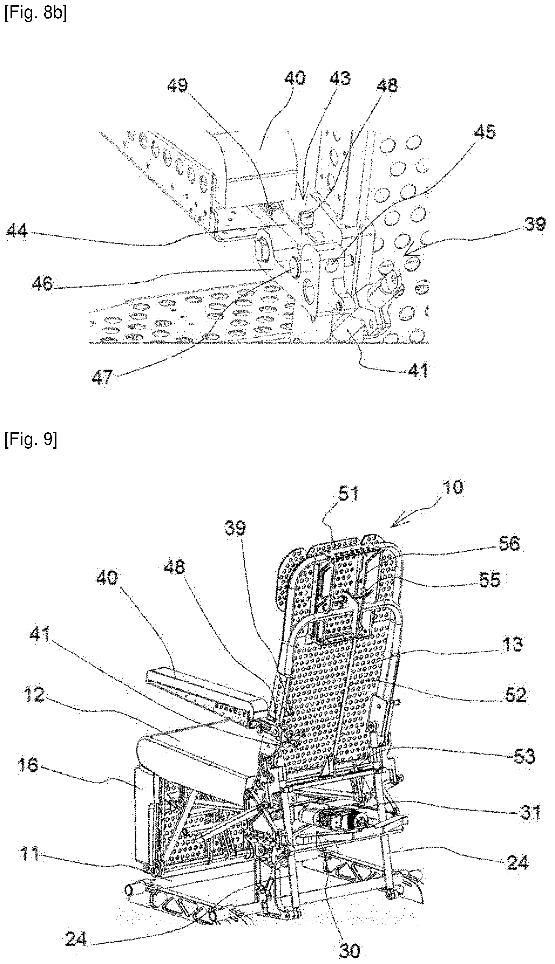

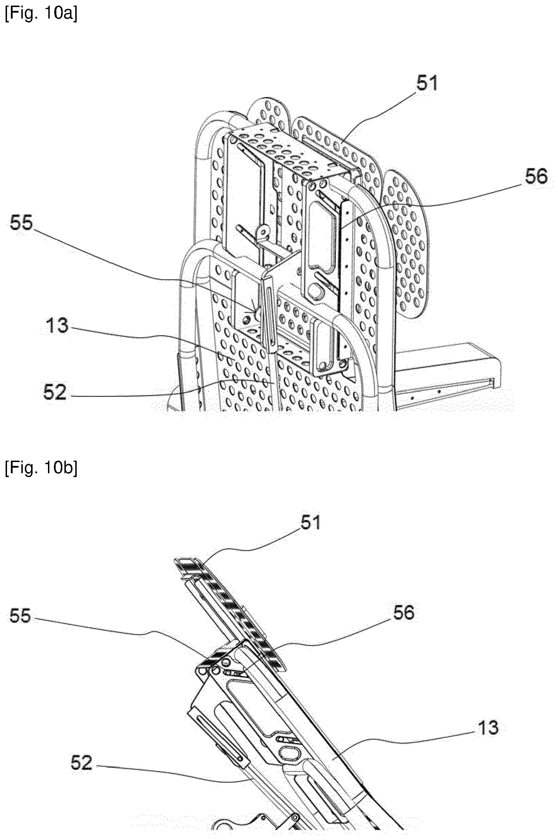

Comme on peut le voir sur les figures 9, 10a, et 10b, le siège 10 pourra également comporter une têtière 51 mobile entre une position haute dans laquelle la têtière 51 est surélevée par rapport au dossier 13 (cf. figure 10a) et une position basse dans laquelle la têtière 51 se situe dans un prolongement du dossier 13 (cf. figure 10b) pour augmenter une surface de lit formée par le siège 10.

La têtière 51 est liée par une bielle 52 à une traverse 53 des bielles pivot de dossier 24. En outre, la têtière 51 porte au moins un axe 55 apte à glisser à l'intérieure d'au moins une rainure 56 munie d'un premier niveau correspondant à la position haute de la têtière 51 et d'un deuxième niveau correspondant à la position basse de la têtière 51, tel que cela est montré sur les figures 10a et 10b. Ainsi, lorsque le siège 10 passe en position lit, le passage de la position haute à la position basse de la têtière 51 est effectué automatiquement.

Comme on peut le voir sur les figures 1 et 4, au moins un vérin à gaz 58, en l'occurrence deux, permet d'assister l'actionneur 30 pour participer à la relevée du dossier 13 lorsque le siège 10 passe de la position lit à la position assise 12. En effet, en position basse, l'actionneur 30 doit fournir un effort important qui peut être diminué grâce à la présence du vérin à gaz 58.

A cet effet, le vérin à gaz 58 comporte une première extrémité liée en rotation par rapport à une bielle pivot de dossier 24 et une deuxième extrémité liée en rotation par rapport au support de siège 11.

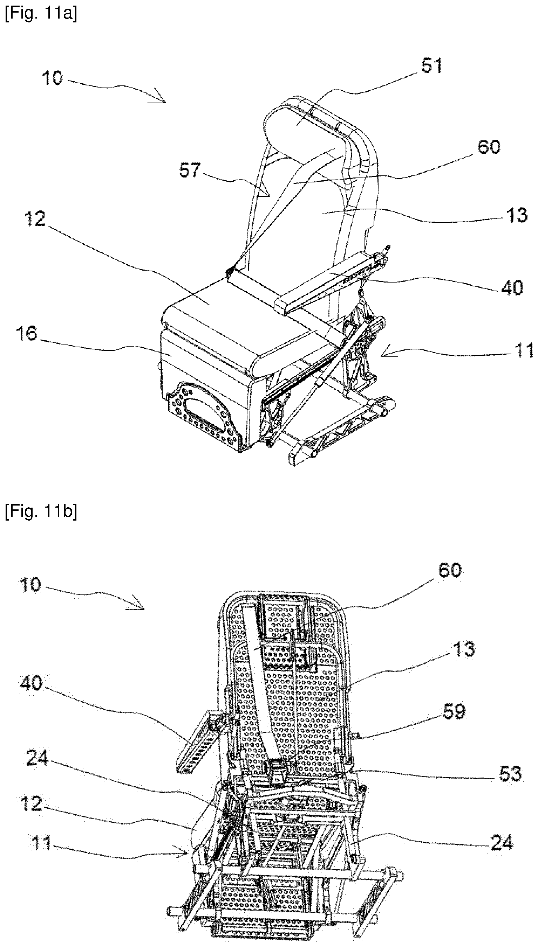

Dans une configuration de siège à trois points de fixation, c'est-à-dire un siège muni d'une ceinture de sécurité 57 ayant un troisième point de fixation situé en haut du dossier 13 en plus des deux autres points de fixation classiques situés au niveau de l'assise 12, un enrouleur 59 d'une sangle 60 destinée à maintenir le haut du corps d'un passager est fixé sur la traverse 53 reliant deux bielles pivot de dossier 24 entre elles, tel que cela est illustré par les figures 11a et 11b.

Une telle configuration permet d'améliorer le comportement du siège 10 en cas de choc. En effet, lors d'un crash, le chemin d'effort passe par les bielles pivot de dossier 24 au support de siège 11 en plus de l'actionneur 30, puis aux verrous de fixation au rail. Cela permet de soulager le chargement à la liaison glissière 19 pour encaisser les efforts générés par la présence du troisième point de fixation de la ceinture de sécurité 57.

II est à noter également qu'en cas de panne électrique, les vérins à gaz intégrés dans le siège 10 permettent de relever plus facilement le siège 10 après déverrouillage.

En variante, tous les éléments du siège étant liés mécaniquement entre eux, l'actionneur 30 unique pourra être disposé entre le support de siège 11 et un élément du siège choisi parmi l'assise 12, le dossier 13, ou le repose-jambes 16. En variante, l'actionneur 30 unique pourra également être disposé entre deux éléments du siège 10, notamment entre l'assise 12 et le dossier 13 ou entre l'assise 12 et le repose-jambes 16 ou entre le dossier 13 et le repose-jambes 16.

L'invention a également pour objet un avion comportant au moins un siège 10 tel que précédemment défini.

## Revendications

1. Siège (10) notamment pour un avion comportant:
- un support de siège (11),
- une assise (12),
- un dossier (13) articulé par rapport à l'assise (12) par l'intermédiaire d'une liaison pivot (14),
- un repose-jambes (16) articulé par rapport à l'assise (12) par l'intermédiaire d'une liaison pivot (17),
- ledit siège (10) étant mobile entre une position assise (12) et une position lit dans laquelle le dossier (13) et le repose-jambes (16) se situent dans un prolongement de l'assise (12), ladite assise (12) est montée coulissante par rapport au support de siège (11),
- et en ce que ledit siège (10) comporte au moins une bielle, dite bielle pivot de dossier (24), comportant une première extrémité liée en rotation par rapport au dossier (13) et une deuxième extrémité liée en rotation par rapport au support de siège (11),
- le repose-jambes (16) étant lié mécaniquement au dossier (13) par l'intermédiaire d'un dispositif de déploiement à bielle (25),
- ledit siège (10) comportant en outre un actionneur (30) unique apte à assurer seul un déplacement d'un ensemble de composants du siège (10) formé au moins par l'assise (12), le dossier (13), et le repose-jambes (16) pour faire passer ledit siège (10) de sa position assise (12) vers sa position lit et inversement.

2. Siège selon la revendication 1, **caractérisé en ce que** l'actionneur (30) unique est disposé entre l'assise (12) et le support de siège (11).

3. Siège selon la revendication 1 ou 2, **caractérisé en ce qu'**il comporte au moins une bielle (33), dit bielle pivot d'assise, ayant une première extrémité liée en rotation par rapport à l'assise (12) et une deuxième extrémité liée en rotation par rapport au support de siège (11).

4. Siège selon l'une quelconque des revendications 1 à 3, **caractérisé en ce que** le repose-jambes (16) comporte une extension (35) portant un repose-pieds (36) permettant de fournir un support pour les pieds d'un passager lorsque l'extension (35) se situe dans une position déployée.

5. Siège selon l'une quelconque des revendications 1 à 4, **caractérisé en ce qu'**il comporte en outre un accoudoir (40) et un système de guidage (39) de l'accoudoir (40) apte à positionner l'accoudoir (40) dans un prolongement du dossier (13) lorsque le siège (10) se trouve dans une position lit.

6. Siège selon la revendication 5, **caractérisé en ce que** le système de guidage (39) comporte un vérin à gaz (41) ayant une première extrémité liée en rotation par rapport à l'accoudoir (40) et une deuxième extrémité liée en rotation par rapport à la bielle pivot de dossier (24).

7. Siège selon la revendication 5 ou 6, **caractérisé en ce qu'**il comporte un système de déverrouillage (43) en rotation de l'accoudoir (40) muni d'un doigt (44) mobile en translation entre une position verrouillée dans laquelle le doigt (44) coopère avec un logement (45) ménagé dans une ferrure (46) liée mécaniquement au vérin à gaz (41) et une position dégagée dans laquelle le doigt (44) est dégagé du logement (45) ménagé dans la ferrure (46) de façon à autoriser une rotation libre de l'accoudoir (40) par rapport à la ferrure (46).

8. Siège selon l'une quelconque des revendications 1 à 7, **caractérisé en ce qu'**il comporte une têtière (51) mobile entre une position haute dans laquelle la têtière (51) est surélevée par rapport au dossier (13) et une position basse dans laquelle la têtière (51) se situe dans un prolongement du dossier (13) pour augmenter une surface de lit.

9. Siège selon la revendication 8, **caractérisé en ce que** la têtière (51) est liée par une bielle (52) à une traverse (53) connectant deux bielles pivot de dossier (24).

10. Siège selon la revendication 8 ou 9, **caractérisé en ce que** la têtière (51) porte au moins un axe (55) apte à glisser à l'intérieure d'au moins une rainure (56) munie d'un premier niveau correspondant à la position haute de la têtière (51) et d'un deuxième niveau correspondant à la position basse de la têtière (51).

11. Siège selon l'une quelconque des revendications 1 à 10, **caractérisé en ce qu'**il comporte au moins un vérin à gaz (58) ayant une première extrémité liée en rotation par rapport à la bielle pivot de dossier (24) et une deuxième extrémité liée en rotation par rapport au support de siège (11).

12. Siège selon l'une quelconque des revendications 1 à 11, **caractérisé en ce que** le dispositif de déploiement à bielle (25) comporte:
- au moins une bielle (26) ayant une première extrémité liée en rotation par rapport au dossier (13) et une deuxième extrémité liée en rotation par rapport à une pièce intermédiaire (27) liée en rotation par rapport à l'assise (12), et
- au moins un vérin à gaz (28) ayant une première extrémité liée en rotation par rapport au repose-jambes (16) et une deuxième extrémité liée en rotation par rapport à la pièce intermédiaire (27).

13. Siège selon les revendications 4 et 12, **caractérisé en ce qu'**un vérin à gaz (37) est lié en rotation à la pièce intermédiaire (27), au repose-jambes (16), et à l'extension (35) du repose-jambes (16) pour permettre un déploiement de l'extension (35) lorsque le repose-jambes (16) passe dans une position relevée.

14. Siège selon l'une quelconque des revendications 1 à 13, **caractérisé en ce qu'**un enrouleur (59) d'une sangle (60) destinée à maintenir le haut du corps d'un passager est fixé sur une traverse (53) reliant deux bielles pivot de dossier (24) entre elles.

15. Avion comportant au moins un siège (10) tel que défini selon l'une quelconque des revendications précédentes.

## Patentansprüche

1. Sitz (10), insbesondere für ein Flugzeug, umfassend:
- eine Sitzstütze (11),
- eine Sitzfläche (12),
- eine über eine Drehverbindung (14) gelenkig mit der Sitzfläche (12) verbundene Rückenlehne (13),
- eine über eine Drehverbindung (17) gelenkig mit der Sitzfläche (12) verbundene Beinstütze (16),
- wobei der Sitz (10) zwischen einer Sitzposition (12) und einer Bettposition bewegbar ist, in der sich die Rückenlehne (13) und die Beinstütze (16) in einer Verlängerung der Sitzfläche (12) befinden,
wobei
die Sitzfläche (12) relativ zum Sitzstütze (11) verschiebbar gelagert ist, und der Sitz (10) mindestens einen Lenker, sogenannten Rückenlehnen-Schwenklenker (24), dessen erstes Ende relativ zur Rückenlehne (13) drehbar verbunden ist und dessen zweites Ende relativ zum Sitzstütze drehbar verbunden ist (11), umfasst,
- die Beinstütze (16) über eine Lenkerausstellvorrichtung (25) mechanisch mit der Rückenlehne (13) verbunden ist,
- der Sitz (10) außerdem einen einzigen Aktuator (30) umfasst, der allein eine Bewegung einer Anordnung von Komponenten des Sitzes (10) gewährleisten kann, die zumindest aus der Sitzfläche (12), der Rückenlehne (13) und der Beinstütze (16) besteht, um den Sitz (10) von seiner Sitzposition (12) in seine Bettposition und umgekehrt zu bewegen.

2. Sitz nach Anspruch 1, **dadurch gekennzeichnet, dass** der einzige Aktuator (30) zwischen der Sitzfläche (12) und der Sitzstütze (11) angeordnet ist.

3. Sitz nach Anspruch 1 oder 2, **dadurch gekennzeichnet, dass** er mindestens einen Lenker (33), sogenannten Sitzflächen-Schwenklenker, dessen erstes Ende relativ zur Sitzfläche (12) drehbar verbunden ist und dessen zweites Ende, das relativ zur Sitzstütze (11) drehbar verbunden ist, umfasst.

4. Sitz nach einem der Ansprüche 1 bis 3, **dadurch gekennzeichnet, dass** die Beinstütze (16) eine Verlängerung (35) aufweist, die eine Fußstütze (36) trägt, die eine Stützung für die Füße eines Passagiers bereitstellt, wenn sich die Verlängerung (35) in einer ausgefahrenen Position befindet.

5. Sitz nach einem der Ansprüche 1 bis 4, **dadurch gekennzeichnet, dass** er außerdem eine Armlehne (40) und ein Führungssystem (39) für die Armlehne (40) zum Positionieren der Armlehne (40) in einer Verlängerung der Rückenlehne (13), wenn sich der Sitz (10) in einer Bettposition befindet, umfasst.

6. Sitz nach Anspruch 5, **dadurch gekennzeichnet, dass** das Führungssystem (39) eine Gasfeder (41), deren erstes Ende relativ zur Armlehne (40) drehbar verbunden ist und deren zweites Ende relativ zum Rückenlehnen-Schwenklenker (24) drehbar verbunden ist, umfasst.

7. Sitz nach Anspruch 5 oder 6, **dadurch gekennzeichnet, dass** er ein Entriegelungssystem (43) bei Drehung der Armlehne (40) umfasst, welches mit einem Finger (44) versehen ist, der translatorisch zwischen einer verriegelten Position, in der die Finger (44) mit einer Aufnahme (45) in einem mechanisch mit der Gasfeder (41) verbundenen Beschlag (46) zusammenwirkt, und eine Außereingriffsposition, in der der Finger (44) von der Aufnahme (45) im Beschlag (46) außer Eingriff ist, um eine freie Drehung der Armlehne (40) relativ zum Beschlag (46) zu ermöglichen, bewegbar it.

8. Sitz nach einem der Ansprüche 1 bis 7, **dadurch gekennzeichnet, dass** er eine Kopfstütze (51) umfasst, die zwischen einer Hochposition, in der die Kopfstütze (51) relativ zur Rückenlehne (13) angehoben ist, und einer Niederposition, in der sich die Kopfstütze (51) in einer Verlängerung der Rückenlehne (13) befindet, um eine Bettfläche zu vergrößern, bewegbar ist.

9. Sitz nach Anspruch 8, **dadurch gekennzeichnet, dass** die Kopfstütze (51) über einen Lenker (52) mit einer zwei Rückenlehne-Schwenklenker (24) verbindenden Traverse (53) verbunden ist.

10. Sitz nach Anspruch 8 oder 9, **dadurch gekennzeichnet, dass** die Kopfstütze (51) mindestens einen Stift (55) trägt, der in mindestens einer Nut (56) gleiten kann, die mit einer der Hochposition der Kopfstütze (51) entsprechenden ersten Stufe und einer der Niedrigposition der Kopfstütze (51) entsprechenden zweiten Stufe versehen ist.

11. Sitz nach einem der Ansprüche 1 bis 10, **dadurch gekennzeichnet, dass** er mindestens eine Gasfeder (58), deren erstes Ende relativ zum dem Rückenlehnen-Schwenklenker (24) drehbar verbunden ist und deren zweites Ende relativ zur Sitzstütze (11) drehbar verbunden ist, umfasst.

12. Sitz nach einem der Ansprüche 1 bis 11, **dadurch gekennzeichnet, dass** die Lenkerausstellvorrichtung (25) umfasst:
- mindestens einen Lenker (26), deren erstes Ende relativ zur Rückenlehne (13) drehbar verbunden ist und deren zweites Ende relativ zu einem relativ zur Sitzfläche (12) drehbar verbundenen Zwischenstück (27) drehbar verbunden ist, und
- mindestens eine Gasfeder (28), deren erstes Ende relativ zur Beinstütze (16) drehbar verbunden ist und deren zweites Ende relativ zum Zwischenstück (27) drehbar verbunden ist.

13. Sitz nach Anspruch 4 und 12, **dadurch gekennzeichnet, dass** eine Gasfeder (37) relativ zum Zwischenstück (27), zur Beinstütze (16) und zur Verlängerung (35) der Beinstütze (16) drehbar verbunden ist, um das Ausfahren der Verlängerung (35) zu ermöglichen, wenn die Beinstütze (16) in eine angehobene Position übergeht.

14. Sitz nach einem der Ansprüche 1 bis 13, **dadurch gekennzeichnet, dass** eine Aufwickeleinrichtung (59) für einen Gurt (60) zum Halten des Oberkörpers eines Passagiers) an einer Traverse (53) befestigt ist, die zwei Rückenlehnen-Schwenklenker (24) miteinander verbindet.

15. Flugzeug mit mindestens einem Sitz (10) gemäß einem der vorhergehenden Ansprüche.

## Claims

1. A seat (10) in particular for an aircraft comprising:
- a seat support (11),
- a seat pan (12),
- a backrest (13) articulated with respect to the seat pan (12) via a pivot connection (14),
- a legrest (16) articulated with respect to the seat pan (12) via a pivot connection (17),
- said seat (10) being movable between a seat position (12) and a bed position in which the backrest (13) and the legrest (16) are located in an extension of the seat pan (12),
wherein
said seat pan (12) is mounted so as to slide relative to the seat support (11), and said seat (10) comprise at least one link, so-called backrest pivot link (24), comprising a first end connected in rotation relative to the backrest (13) and a second end connected in rotation relative to the seat support (11),
- the legrest (16) being mechanically linked to the backrest (13) via a link deployment device (25),
- said seat (10) further comprising a single actuator (30) capable of ensuring alone a movement of a set of components of the seat (10) formed at least by the seat pan (12), the backrest (13), and the legrest (16) in order to move said seat (10) from its seat position (12) to its bed position and vice versa.

2. The seat according to Claim 1, **characterized in that** the single actuator (30) is arranged between the seat pan (12) and the seat support (11).

3. The seat according to Claim 1 or 2, **characterized in that** it comprises at least one link (33), so-called seat pan pivot link, having a first end connected in rotation with respect to the seat pan (12) and a second end connected in rotation with respect to the seat support (11) .

4. The seat according to any one of the claims 1 to 3, **characterized in that** the legrest (16) comprises an extension (35) carrying a footrest (36) providing a support for the feet of a passenger when the extension (35) is in a deployed position.

5. The seat according to any one of the claims 1 to 4, **characterized in that** it further comprises an armrest (40) and a guiding system (39) for the armrest (40) capable of positioning the armrest (40) in an extension of the backrest (13) when the seat (10) is in a bed position.

6. The seat according to Claim 5, **characterized in that** the guiding system (39) comprises a gas spring (41) having a first end connected in rotation with respect to the armrest (40) and a second end connected in rotation with respect to the backrest pivot link (24).

7. The seat according to Claim 5 or 6, **characterized in that** it comprises an unlocking system (43) in rotation of the armrest (40) provided with a finger (44) movable in translation between a locked position in which the finger (44) cooperates with a housing (45) in a fitting (46) mechanically linked to the gas spring (41) and a disengaged position in which the finger (44) is disengaged from the housing (45) in the fitting (46) so as to allow free rotation of the armrest (40) relative to the fitting (46).

8. The seat according to any one of the claims 1 to 7, **characterized in that** it comprises a headrest (51) movable between a high position in which the headrest (51) is raised relative to the backrest (13) and a low position in which the headrest (51) is located in an extension of the backrest (13) in order to increase a bed surface.

9. The seat according to Claim 8, **characterized in that** the headrest (51) is connected by means of a link (52) to a crosspiece (53) connecting two backrest pivot link (24) .

10. The seat according to Claim 8 or 9, **characterized in that** the headrest (51) carries at least one pin (55) capable of sliding inside at least one groove (56) provided with a first level corresponding to the high position of the headrest (51) and a second level corresponding to the low position of the headrest (51).

11. The seat according to any one of the claims 1 to 10, **characterized in that** it comprises at least one gas spring (58) having a first end connected in rotation with respect to the backrest pivot link (24) and a second end connected in rotation with respect to the seat support (11).

12. The seat according to any one of the claims 1 to 11, **characterized in that** the link deployment device (25) comprises:
- at least one link (26) having a first end connected in rotation with respect to the backrest (13) and a second end connected in rotation with respect to an intermediate piece (27) connected in rotation with respect to the seat pan (12), and
- at least one gas spring (28) having a first end connected in rotation with respect to the legrest (16) and a second end connected in rotation with respect to the intermediate piece (27).

13. The seat according to Claims 4 and 12, **characterized in that** a gas spring (37) is connected in rotation to the intermediate piece (27), to the legrest (16), and to the extension (35) of the legrest (16) to allow deployment of the extension (35) when the legrest (16) passes into a raised position.

14. The seat according to any one of the claims 1 to 13, **characterized in that** a winder (59) for a strap (60) for holding the upper part of the body of a passenger is fixed on a crosspiece (53) connecting two backrest pivot links (24) together.

15. An aircraft comprising at least one seat (10) as defined according to any one of the preceding claims.
